# EUROPÄISCHE PATENTSCHRIFT

(11) **EP 1 357 854 B1**
(45) Veröffentlichungstag und Bekanntmachung des Hinweises auf die Patenterteilung: **07.09.2005**
(21) Anmeldenummer: 01273663.3
(22) Anmeldetag: 08.12.2001
(51) Int. Cl.: A61C 17/34

(54) **ELEKTRISCHE ZAHNBÜRSTE**
ELECTRIC TOOTHBRUSH
BROSSE A DENTS ELECTRIQUE

(30) Priorität: 08.02.2001 DE 10105764
(43) Veröffentlichungstag der Anmeldung: 05.11.2003
(73) Patentinhaber: Braun GmbH, 61476 Kronberg (DE)
(72) Erfinder: HILSCHER, Alexander, 61476 Kronberg (DE); REICK, Hansjörg, 61449 Steinbach (DE)
(86) Internationale Anmeldenummer: PCT/EP2001/014430
(87) Internationale Veröffentlichungsnummer: WO 2002/062258

(56) Entgegenhaltungen:
- WO-A-98/01083

## Beschreibung

Die vorliegende Erfindung betrifft ein Elektrokleingerät des persönlichen Bedarfs, insbesondere eine Zahnbürste, mit einem beweglich gelagerten Arbeitskopf sowie einem Antrieb zur Erzeugung einer oszillierenden Arbeitsbewegung des Arbeitskopfes, wobei der Antrieb ein zyklisch bewegbares Antriebsteil sowie ein Folgeteil aufweist, das mittels einer Vorspannvorrichtung gegen das Antriebsteil gespannt ist, um dessen zyklischer Antriebsbewegung zu folgen.

Eine Zahnbürste dieser Art ist aus der WO 98/01083 bekannt. Bei der darin gezeigten Zahnbürste ist ein aus dem Handteil herausragender Bürstenkopfträger, in dessen Inneren eine Antriebswelle zum Antrieb des Bürstenkopfes angeordnet ist, als Ganzes nach Art einer Wippe relativ zum Handteil der Zahnbürste schwenkbar gelagert. Das im Inneren des Handteils liegende, dem Bürstenkopf gegenüberliegende Ende des Bürstenkopfträgers ist mittels einer Feder gegen einen Exzenter gespannt, der vom Antriebsmotor der Zahnbürste angetrieben wird, so daß der Bürstenkopfträger der Antriebsbewegung des Exzenters folgt und dementsprechend eine oszillierende Wippbewegung ausführt. Hierdurch erfährt der am äußeren Ende des Bürstenkopfträgers gelagerte Bürstenkopf eine hin- und hergehende Hub- bzw. Stocherbewegung, durch die Zahnverunreinigungen, insbesondere Plaque besser entfernt werden können.

Bei einer derartigen Stocherbewegung des Bürstenkopfes soll jedoch vermieden werden, daß das Zahnfleisch gereizt oder gar verletzt wird. Dies droht insbesondere bei einem zu starken Anpreßdruck des Bürstenkopfes gegen die zu putzenden Zähne.

Es wurde daher bereits vorgeschlagen, eine Anpreßdruckkontrolle vorzusehen. Mittels einer Druckerfassungsvorrichtung wird der jeweilige Anpreßdruck erfaßt, so daß dem Benutzer angezeigt werden kann, ob mit dem richtigen Anpreßdruck geputzt wird. So ist beispielsweise bei der aus der WO 92/13499 bekannten Zahnbürste vorgesehen, die Antriebswelle quer zur Mittellängsachse der selben aus einer Ruhestelle entgegen einer Rückstellkraft verschwenkbar zu lagern, so daß sie bei Erreichen einer medizinisch notwendigen Andruckkraft am Bürstenkopf eine im Zahnbürstengehäuse untergebrachte Einrichtung zur Erzeugung bzw. Einleitung von akustischen oder optischen Signalen betätigt.

Weitere elektrische Zahnbürsten, bei denen mittels eines dem Bürstenkopfträger bzw. dem Antriebsschaft zugeordneten Drucksensors die Reaktionskraft auf die Andruckkraft gemessen wird, sind beispielsweise aus der DE 44 26 446 A1 oder der EP 0 158 870 B1 bekannt.

Bei den bekannten Lösungen zur Erfassung des Anpreßdruckes sind relativ teure und empfindliche Drucksensoren verwendet. Zudem werden aufwendige Signalverarbeitungen eingesetzt. Insbesondere bei Zahnbürsten, die eine hin- und hergehende Stocherbewegung ausführen, gestaltet sich die Erfassung des Anpreßdrucks schwierig. Andererseits sind einfache Lösungen zur Erfassung der Anpreßkraft, die lediglich mit Kontakten eine Schwelle der Putzkraft erkennen, insofern nachteilig, als sie eben nur diese eine Schwelle der Putzkraft erkennen. Letztere soll jedoch einerseits ausreichend groß sein, um Zahnverunreinigungen und Plaque wirksam zu lösen, und andererseits aber ein bestimmtes Maß nicht überschreiten, um Verletzungen des Zahnfleisches zu vermeiden. Es ist daher wünschenswert, dem Benutzer sowohl das Unterschreiten einer unteren Putzkraftgrenze als auch das Überschreiten einer oberen Putzkraftgrenze anzuzeigen.

Der vorliegenden Erfindung liegt daher die Aufgabe zugrunde, ein verbessertes Elektrokleingerät der eingangs genannten Art zu schaffen, das Nachteile des Standes der Technik vermeidet und letzteren in vorteilhafter Weise weiterbildet. Insbesondere soll eine einfache und zuverlässige Erfassung des mit dem Arbeitskopf ausgeübten Anpreßdrucks erreicht werden.

Die genannte Aufgabe wird erfindungsgemäß durch ein Elektrokleingerät gemäß Patentanspruch 1 gelöst. Bevorzugte Ausgestaltungen der Erfindung sind Gegenstand der abhängigen Ansprüche.

Es ist also eine Druckerfassungseinrichtung vorgesehen, die den Kopplungszustand des Folgeteils mit dem Antriebsteil erfaßt und den Anpreßdruck des Arbeitskopfes in Abhängigkeit des erfaßten Kopplungszustands bestimmt. Es wird dabei von der Erkenntnis ausgegangen, daß ein zunehmender Anpreßdruck des Arbeitskopfes, der der Vorspannung von Folgeteil und Antriebsteil entgegenwirkt, den Kopplungszustand von Folgeteil und Antriebsteil verändert. Das Folgeteil wird vom Anpreßdruck des Arbeitskopfes beaufschlagt und ist entgegen diesem vorgespannt, so daß bei Überschreiten eines bestimmten Anpreßdruckes die Vorspannung nicht mehr ausreicht, um eine vollständige Kopplung von Folgeteil und Antriebsteil zu bewirken. Erfindungsgemäß ist eine Erfassung vorgesehen, inwieweit das Folgeteil des Antriebs dem zugehörigen Antriebsteil tatsächlich folgt, woraus dann der Anpreßdruck des Arbeitskopfs bestimmt werden kann. Es versteht sich, daß das genannte Prinzip auch angewendet werden kann, wenn nicht das Folgeteil gegen das Antriebsteil, sondern das Antriebsteil gegen das Folgeteil vorgespannt ist. Vorzugsweise jedoch beaufschlagt die Vorspannvorrichtung das Folgeteil, das mit dem Arbeitskopf verbunden und beweglich gelagert ist. Es versteht sich, daß auch andere als zyklische Antriebsbewegungen Anwendung finden können.

In Weiterbildung der Erfindung ist die Vorspannvorrichtung, die zwischen Antriebsteil und Folgeteil wirkt, derart ausgebildet, daß bei einem Anpreßdruck innerhalb eines Sollbereiches das Folgeteil nur über einen Teilabschnitt eines Bewegungszyklus des Antriebsteils mit diesem gekoppelt ist. Im restlichen Teil des genannten Bewegungszyklus wird das Folgeteil vom Anpreßdruck entgegen der Vorspannung von dem Antriebsteil außer Eingriff gebracht. Es sind somit drei Betriebsbereiche vorgesehen. In einem ersten Betriebsbereich ist das Folgeteil vollständig mit dem Antriebsteil in Eingriff und folgt dessen zyklischer Antriebsbewegung unmittelbar,
d. h. eins zu eins. In einem zweiten Betriebsbereich folgt das Folgeteil dem Antriebsteil nur über einen Teil von dessen Bewegungszyklus, während es im restlichen Teil des Bewegungszyklus von dem Antriebsteil außer Eingriff gelangt. In einem dritten Betriebsbereich schließlich sind Folgeteil und Antriebsteil vollständig voneinander abgekuppelt, so daß das Folgeteil der Antriebsbewegung des Antriebsteils nicht folgt und vollständig außer Tritt geraten ist. Hierdurch können sowohl ein unterer Grenzwert als auch ein oberer Grenzwert des Sollbereiches der Anpreßkraft erfaßt werden. Zudem kann innerhalb des Sollbereiches der Anpreßdruck quantitativ bestimmt werden. Dem Sollbereich des zu erfassenden Anpressdruckes entspricht der vorgenannte zweite Betriebsbereich.

Insbesondere kann der Anpreßdruck aus einem Tastverhältnis bestimmt werden, das den Eingriffszustand von Folgeteil und Antriebsteil angibt. Das Tastverhältnis wird aus dem Anteil eines Bewegungszyklus bzw. mehrerer Bewegungszyklen des Antriebsteils, während dem bzw. der das Folgeteil der Antriebsbewegung des Antriebsteiles folgt und dem Anteil des Bewegungszyklus bzw. der mehreren Bewegungszyklen, während denen das Folgeteil von dem Antriebsteil abgekoppelt ist, bestimmt. Das Tastverhältnis ist ein Maß dafür, wie stark das Folgeteil bezüglich der zyklischen Antriebsbewegung des Antriebsteiles außer Tritt gerät und damit ein Maß für die vom Arbeitskopf ausgeübte Anpreßkraft. Durch die Bestimmung des Anpreßdruckes aus einem Tastverhältnis kann über eine einfache Ein-/Auserfassung eine quantitative Bestimmung des Anpreßdrucks erfolgen. Die Verbindung zwischen Folgeteil und Antriebsteil wird als Schalter genutzt.

Das Tastverhältnis kann bereits anhand eines Bewegungszyklus bestimmt werden. Gegebenenfalls kann es auch über mehrere Zyklen hinweg gemittelt werden, um Erfassungstoleranzen zu verringern und eine höhere Meßgenauigkeit zu erreichen.

Das Tastverhältnis kann über eine Zeiterfassung bestimmt werden, d. h. es werden die Zeitperioden der jeweiligen Kopplungszustände erfaßt und zueinander in Beziehung gesetzt. Zur Bestimmung des Tastverhältnisses können auch die zurückgelegten Wegabschnitte bzw. zurückgelegten Drehwinkelabschnitte eines Bewegungszyklus des Antriebsteiles, in denen die entsprechende Kopplungszustände vorliegen, erfaßt und zueinander in Beziehung gesetzt werden.

In Weiterbildung der Erfindung wird zur Erfassung des Kopplungszustandes von Folgeteil und Antriebsteil deren Kontakt miteinander erfaßt. Insbesondere kann ein elektrisch leitender Kontakt der beiden Teile erfaßt werden. Hierzu können die beiden Teile zumindest in ihren sich berührenden Abschnitten aus Metall ausgebildet sein und mit einer Spannung beaufschlagt werden. Solange die beiden Teile sich berühren, fließt ein elektrischer Strom. Sobald sie außer Eingriff gelangen, fließt kein Strom mehr. Es ist also eine einfache Ein-/Auserfassung des Eingriffszustandes von Folgeteil und Antriebsteil vorgesehen, insbesondere über eine elektrisch leitende Ausbildung der sich berührenden Abschnitte hiervon, so daß entsprechend dem Eingriffszustand ein Signalstrom fließt bzw. unterbunden ist. Das Folgeteil und das Antriebsteil bilden gemeinsam einen Schalter, der vorteilhafterweise als Kopplungserfassungsvorrichtung genutzt werden kann.

Als Antrieb, dessen Kopplungszustand zur Bestimmung des Anpreßdruckes erfaßt wird, ist insbesondere ein Hubantrieb vorgesehen, der den beweglich gelagerten Arbeitskopf in eine hin- und hergehende Hub- bzw. Stocherbewegung versetzt. Als zyklisch bewegbares Antriebsteil des Antriebs kann insbesondere ein Nocken vorsehen sein, auf dessen Kurvenfläche das Folgeteil abrollt bzw. gleitet. Insbesondere ist ein rotatorisch antreibbarer Nocken vorgesehen, der als Exzenter wirkt, dessen Drehbewegung in eine hin- und hergehende Bewegung des Folgeteils umgewandelt wird. Die Eingriffserfassung erfolgt also vorzugsweise unmittelbar zwischen dem Nocken und dem diesen folgenden Folgeteil. Die Schnittstelle, deren Kopplungszustand erfaßt wird, könnte auch an anderer Stelle im Antriebsstrang liegen. Vorzugsweise jedoch wird die vorgespannte Verbindung zwischen Nocken und darauf abrollendem Folgeteil dazu genutzt, den Kopplungszustand zu überwachen.

Hinsichtlich des Folgeteils kann der Antrieb unterschiedlich ausgebildet sein. Das Folgeteil ist insbesondere beweglich gelagert und derart mit dem Arbeitskopf verbunden, daß eine Bewegung des Folgeteils auf den Arbeitskopf übertragen wird. Die Hubbewegung des Arbeitskopfes kann vorzugsweise dadurch erreicht werden, daß der gesamte Arbeitskopfträger, in dessen Inneren eine Antriebswelle vorgesehen sein kann, nach Art einer Wippe schwenkbar gelagert ist. Das Folgeteil kann in diesem Falle insbesondere ein endseitiger Armteil dieser Wippanordnung sein, der gegen den Nocken mittels einer Feder gespannt ist. Der Hubantrieb kann auch dergestalt realisiert sein, daß der Arbeitskopfträger relativ zum Handteil starr und nur der Arbeitskopf relativ zum Arbeitskopfträger beweglich gelagert ist. In diesem Fall kann ein im Inneren des Arbeitskopfträgers beweglich gelagertes Teil des Antriebsstrangs das Folgeteil bilden. In Weiterbildung der Erfindung kann auch nur die Antriebsachse beweglich gelagert sein, um die Hub- bzw. Stocherbewegung des Arbeitskopfes zu erzeugen. In diesem Fall kann die Antriebsachse das Folgeteil bilden, das von einem entsprechenden Nocken zu einer Querschwingung angeregt wird.

Nach einer anderen vorteilhaften Weiterbildung der Erfindung kann der Nocken an dem beweglich gelagerten, mit dem Arbeitskopf verbundenen Antriebsteil angeordnet sein und auf einem weiteren angetriebenen Antriebsteil, das eine Motorwelle bzw. eine darauf sitzende Hülse sein kann, ablaufen. In Umkehrung der zuvorgenannten Anordnung wird hier der Nokken angetrieben, dessen Abheben von dem weiteren Antriebsteil überwacht wird.

Gemäß einer vorteilhaften Ausführung der Erfindung ist eine Einstellvorrichtung zur Einstellung des oberen Sollwerts und/oder des unteren Sollwerts der Anpreßkraft vorgesehen. Insbesondere kann die Einstellvorrichtung die Vorspannkraft der Vorspannvorrichtung verändern. Mittels der genannten Einstellvorrichtung können also einerseits die Systemeinstellungen so verändert werden, daß der Punkt verschoben wird, an dem das Folgeteil anfängt, der Antriebsbewegung des Antriebsteils nicht mehr vollständig zu folgen. Andererseits können mittels der Einstellvorrichtung die Systemparameter derart verändert werden, daß eine Verschiebung des Punktes erreicht wird, an dem das Folgeteil vollständig vom Antriebsteil abgekoppelt wird.

Die Auswertung des den Kopplungszustand wiedergebenden Signals kann auf verschiedene Art und Weise erfolgen. Gemäß einer bevorzugten Ausführung der Erfindung wird das Ein-/Aussignal, das den Eingriffszustand von Folgeteil und Antriebsteil wiedergibt, über ein Filter ausgewertet. Die Druckbestimmungsvorrichtung weist eine Filterschaltung auf, deren Eingangsseite mit der Kopplungserfassungseinrichtung verbunden ist.

In altemativer Ausführung der Erfindung kann das Ein-/Aussignal, das den Eingriffszustand angibt, direkt einem Mikrokontroller zugeführt werden, der das Tastverhältnis direkt mißt und je nach Schwelle ein Anzeigeelement ansteuert. Bei dieser Ausführung weist die Druckbestimmungsvorrichtung also eine Recheneinheit, insbesondere einen Mikrokontroller auf.

Als Anzeigevorrichtung, die dem Benutzer den erfaßten Anpreßdruck anzeigt, kann eine akustische oder auch eine optische Vorrichtung vorgesehen sein. Insbesondere kann eine LED-Anzeige zur Anzeige des bestimmten Anpreßdrucks vorgesehen sein.

Nachfolgend wird die Erfindung anhand von bevorzugten Ausführungsbeispielen und zugehöriger Zeichnungen näher erläutert. In den Zeichnungen zeigen:
- Fig. 1: Eine schematische Darstellung einer elektrischen Zahnbürste nach einer bevorzugten Ausführung der Erfindung in einem Längsschnitt,
- Fig. 2: eine Schnittansicht der Zahnbürste aus Figur 1 entlang dem Schnitt A-A in Figur 1,
- Fig. 3: eine Figur 1 ähnliche schematische Darstellung einer elektrischen Zahnbürste nach einer weiteren bevorzugten Ausführung der Erfindung in einem Längsschnitt in Teilansicht,
- Fig. 4: eine Figur 1 ähnliche schematische Darstellung einer elektrischen Zahnbürste nach einer weiteren bevorzugten Ausführung der Erfindung in einem Längsschnitt in Teilansicht,
- Fig. 5: eine schematische Darstellung des Eingriffszustandes eines Exzenters mit einem davon angetriebenen Folgeteil bei verschiedenen Anpreßdrücken, und
- Fig. 6: eine schematische Darstellung der Signalniveaus eines den Eingriffszustand des Folgeteils und des Nockens aus Figur 5 wiedergebenden Signals bei unterschiedlichen Anpreßkräften.

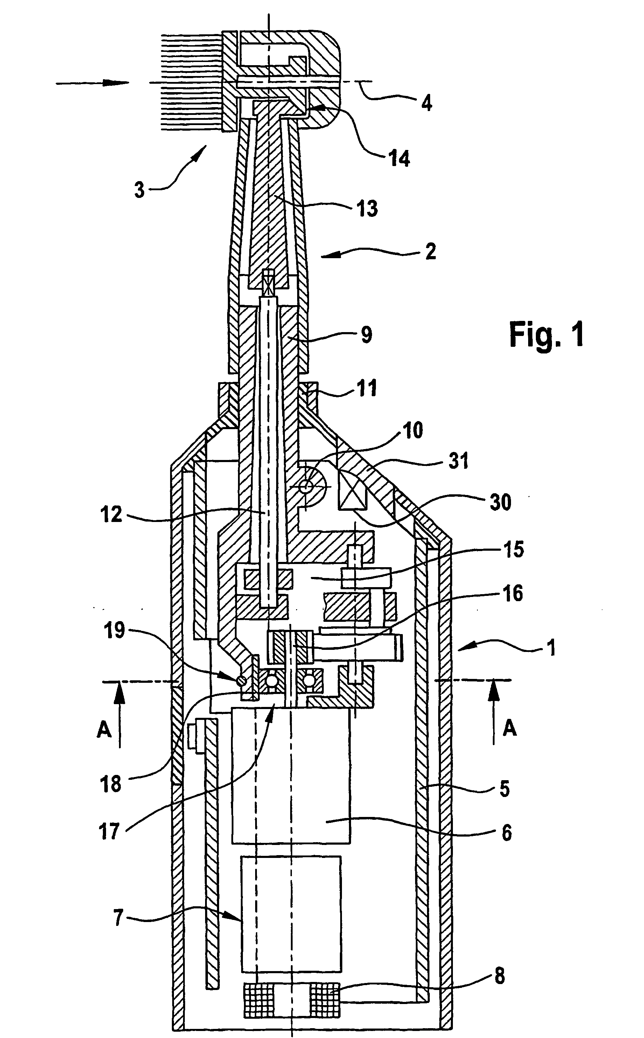

Die elektrische Zahnbürste gemäß Figur 1 besitzt ein Griffteil 1, auf das ein Bürstenträger 2 aufgesteckt werden kann. An dem von dem Griffteil 1 auskragenden Ende des Bürstenträgers 2 ist ein Bürstenkopf 3 angeordnet, der an dem Bürstenträger 2 um eine zur Längsachse des Bürstenträgers im wesentlichen senkrechte Achse 4 drehbar gelagert ist.

Im Inneren des Griffteils 1 ist ein Chassis 5 vorgesehen, an dem ein Antriebsmotor 6, ein Akkumulator 7 sowie weitere elektronische Bauteile wie beispielsweise eine Ladespule 8 befestigt sind (vgl. Figur 1). Des weiteren ist an dem Chassis 5 eine Schwinge 9 um eine Schwingenachse 10 schwenkbar gelagert. Die Schwingenachse 10 erstreckt sich im wesentlichen quer zur Längsachse des Griffteils 1. Die Schwinge 9 ragt aus dem Griffteil 1 heraus. Der Bürstenträger 2 kann auf das herausragende Ende der Schwinge 9 aufgesteckt werden, so daß er zusammen mit der Schwinge 9 um die Schwingenachse 10 wippbar ist. Der zwischen dem Griffteil 1 und der aus diesem heraustretenden Schwinge verbleibende Ringraum kann durch eine elastische Membran 11 oder dergleichen verschlossen sein, die die Wippbewegung um die Schwingenachse 10 gestattet.

Im Inneren der Schwinge 9 ist eine Antriebswelle 12 vorgesehen, die beim Aufstecken des Bürstenträgers 2 mit einer bürstenträgerseitigen Antriebswelle 13 in drehfesten Eingriff gelangt, die über eine Kegelradstufe 14 den Bürstenkopf 3 um die Drehachse 4 rotatorisch antreibt. Das motorseitige Ende der Antriebswelle 12 ist mit dem Antriebsmotor 6 verbunden, und zwar über ein an sich bekanntes Getriebe 15 in Form eines Gelenkvierecks. Die kontinuierliche Drehbewegung der Motorwelle 16 wird mittels des Getriebes 15 in eine rotatorische, oszillierende Bewegung der Antriebswelle 12 umgesetzt, so daß schließlich der Bürstenkopf 3 rotatorisch hin- und hergehend angetrieben wird.

Zusätzlich kann durch die schwenkbare Anordnung der Schwinge 9 eine im wesentlichen translatorische Hub- bzw. Stocherbewegung des Bürstenkopfes 3 entlang der Achse 4 erzeugt werden. Die Schwinge 9 sitzt mit ihrem dem Bürstenträger 2 abgewandten Ende auf einem als Exzenter ausgebildeten Nocken 17, der auf der Motorwelle 16 sitzt. Das dem Bürstenkopf 3 abgewandte Ende der Schwinge 9 bildet ein Folgeteil 18, das der Kurvenfläche bzw. der zyklischen Bewegung des Nockens 17 folgt, so daß die Schwinge 9 eine hin- und hergehende Wippbewegung ausführt. Das Folgeteil 18 der Schwinge 9 ist hierzu mittels einer Vorspannvorrichtung 19 in Form einer Feder gegen den Nocken 17 vorgespannt. Die Anordnung ist dabei derart getroffen, daß die Vorspannung über die Schwinge 9 den Bürstenkopf 3 zu dessen Arbeitsseite hin drückt, während der Nocken 17 mit seiner entsprechenden Kurvenfläche den Bürstenkopf 3 in die entgegengesetzte Richtung drückt.

Als Nocken 17 ist in der gezeichneten Ausführung ein als Exzenter ausgebildetes Wälzlager vorgesehen. Der auf der Motorwelle 16 sitzende Innenring des Wälzlagers kann als Exzenter ausgebildet sein, so daß der Außenring des Wälzlagers eine zyklische, gemäß Figur 1 von rechts nach links hin- und hergehende Bewegung ausführt. In altemativer Ausführung kann ein herkömmliches Wälzlager vorgesehen sein, das auf einem exzentrischen Bund der Motorwelle 16 sitzt, wodurch das gesamte Wälzlager eine entsprechende oszillierende Bewegung ausführt und als Exzenter wirkt.

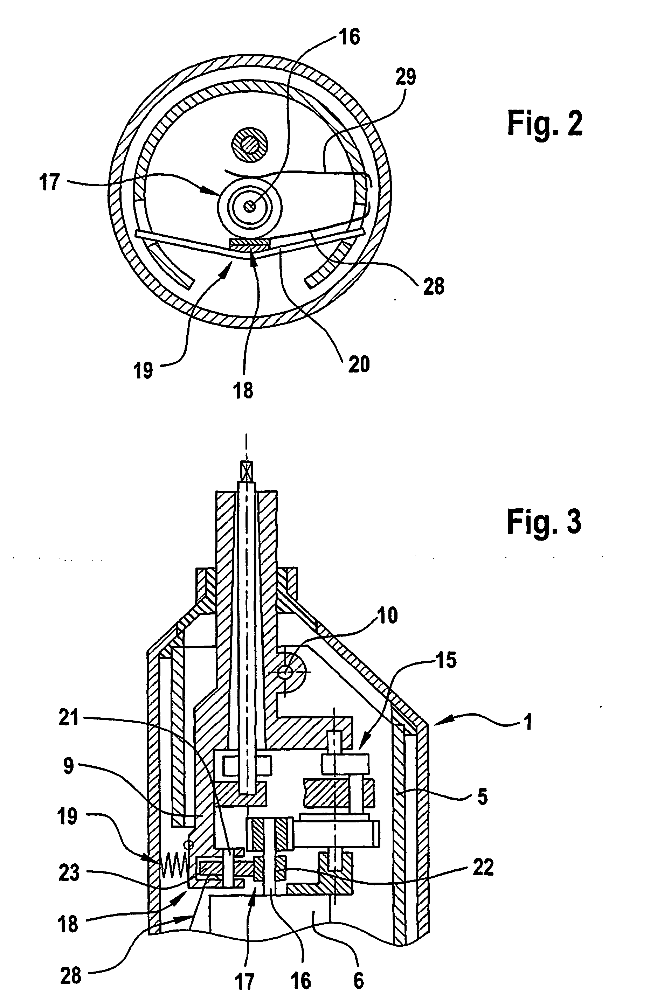

Wie Figur 2 zeigt, ist zur Vorspannung des motorseitigen Endes der Schwinge 9, das den Folgeteil bildet, eine Bügelfeder 20 vorgesehen, die sich an dem Chassis 5 abstützt und das genannte Ende der Schwinge 9 gegen den Nocken 17 drückt.

In alternativer Ausbildung der Erfindung kann anstelle der Bügelfeder 20 auch eine Schraubenfeder vorgesehen sein. Die Vorspannfeder 21 kann sich anstelle an dem Chassis 5, auch unmittelbar an dem Griffteil 1 abstützen, um die Schwinge 9 gegen den Nocken 17 zu drücken. Entsprechend der Ausführung nach Figur 3 kann auch die Anordnung des Wälzlagers 19 umgekehrt erfolgen. Wie Figur 3 zeigt, kann an dem motorseitigen Ende der Schwinge 9 ein Achsbolzen 21 vorgesehen sein, der sich parallel zu der Motorwelle 16 erstreckt. Auf diesem Achsbolzen 21 sitzt eine drehbare Scheibe 23, die auf der Motorwelle 16 bzw. einer darauf sitzenden Hülse 22 abläuft. Um eine zyklische Antriebsbewegung der Schwinge 9 zu erreichen, kann die Scheibe 23 als Kurvenscheibe ausgebildet sein und einen Exzenter bilden, der auf der Hülse 22 abläuft. Alternativ kann die Hülse 22 exzentrisch ausgebildet sein, auf der eine dann vorzugsweise zylindrische Scheibe 23 abrollt. Die Scheibe 23 kann z. B. als Wälzlager ausgebildet sein. Scheibe 23 und Hülse 22 können auch als Kurvenscheibe mit mehreren Erhebungen über dem Umfang ausgeführt sein.

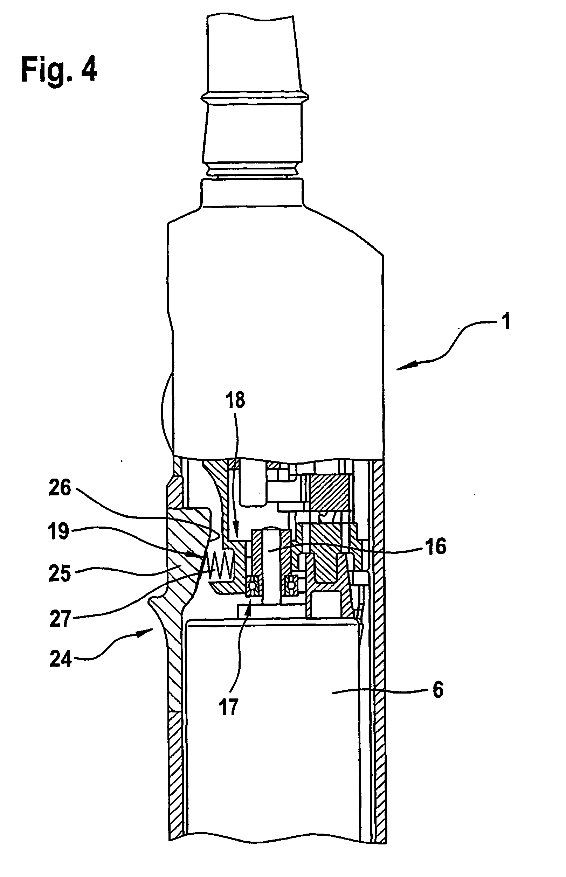

Wie Figur 4 zeigt, ist nach einer vorzugsweisen Ausführungsform der Erfindung eine Einrichtung 24 zur Einstellung der Vorspannkraft vorgesehen, mit der das motorseitige Ende der Schwinge 9 gegen das motorseitige Antriebsteil vorgespannt ist. Die Einstellvorrichtung 24 kann als Schalter, insbesondere Schiebeschalter 25 ausgebildet sein, der verschieblich im Griffteil 1 gelagert ist. Mit einer Keilfläche 26 kann der Schiebeschalter 25 die effektive Länge der Vorspannfeder 27 verändern.

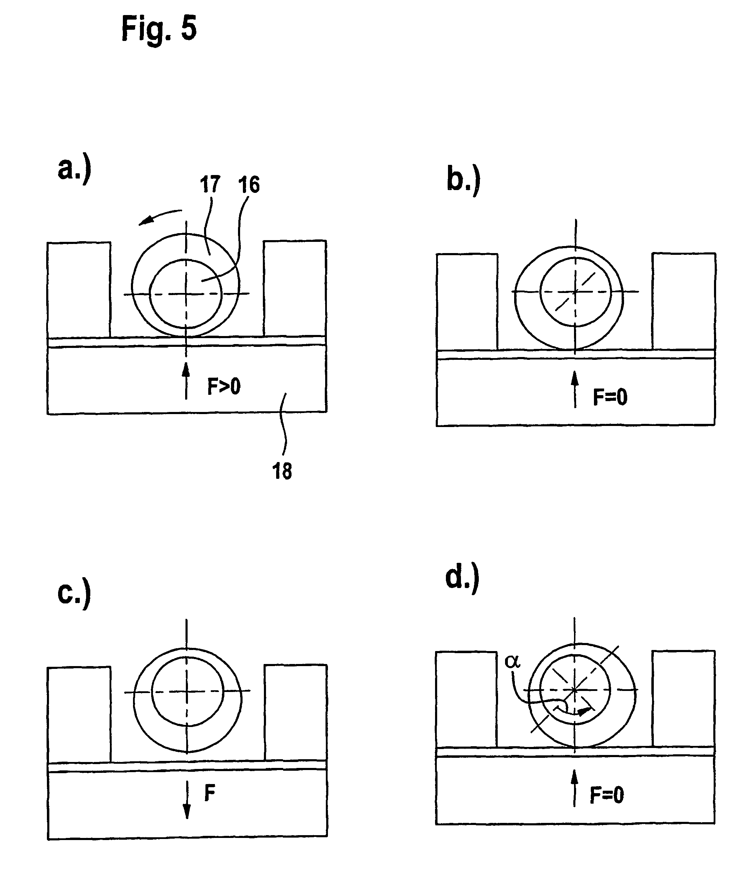

Im Betrieb regt die Drehbewegung der Motorwelle 16 über den Nocken 17 die Schwinge 9 zu einer hin- und hergehenden Wippbewegung und damit den Bürstenkopf 3 zu einer entsprechenden hin- und hergehenden Hubbewegung an. Die Vorspannung des Folgeteils 18 zu dem motorseitigen Antriebsteil hin ist dabei derart bemessen, daß im unbelasteten Zustand des Bürstenkopfes 3 das Folgeteil 18 vollständig der zyklischen Antriebsbewegung des Nockens 17 folgt, d. h. die zyklische Bewegung des Nockens wird vollständig in eine entsprechende Wippbewegung der Schwinge 9 umgesetzt. Dieser Zustand hält an, bis auf den Bürstenkopf 3 eine Anpreßkraft ausgeübt wird, die einem unteren Sollwert entspricht. Dieser Zustand ist in Figur 5 a dargestellt. Die resultierende Andruckkraft F zwischen dem Folgeteil 18 und dem Nocken 17 ist größer Null, so daß stets Kontakt zwischen Folgeteil und Antriebsteil besteht. Überschreitet die Andruckkraft bzw. Putzkraft den unteren Schwellwert, wird die resultierende Andruckkraft F zwischen Folgeteil und Antriebsteil in einer bestimmten Stellung der Motorwelle 16 gleich Null, so daß sich Folgeteil 18 und Antriebsteil 17 zu lösen beginnen. Der Kontakt zwischen beiden Teilen ist damit geöffnet. Nach einem entsprechenden Drehwinkel α beginnt zwischen Folgeteil und Antriebsteil wieder der Eingriff. Für den restlichen Teil der Motordrehung drückt die resultierende Andruckkraft Folgeteil und Antriebsteil wieder aufeinander, so daß der Kontakt geschlossen ist. Der Drehwinkel α, bei dem der Kontakt zwischen Folgeteil und Antriebsteil geöffnet ist, steigt mit zunehmender Putzkraft bis zum dauerhaften Abheben, bei dem dann der Drehwinkel α 360 Grad entspricht. Für ein optimales Reinigungsergebnis beim Zähneputzen soll eine minimale Andruckkraft von ca. 0,8 bis 1 Newton eingehalten werden. Diese Putzkraft soll andererseits einen Maximalwert von etwa 1,8 bis 2,3 Newton nicht überschreiten, um Verletzungen an Zahnfleisch und Zahnsubstanz zu verhindern.

Die Vorspannung der Vorspannvorrichtung 19 ist nun idealerweise so gewählt, daß bis zum Erreichen der minimalen Sollkraft stets Eingriff zwischen dem Folgeteil 18 und dem Antriebsteil 17 herrscht und der Kontakt über die volle Motorumdrehung geschlossen ist. Die Federkennlinie der Vorspannvorrichtung 19, der Hub des Nockens sowie die Trägheit von Getriebe und Aufsteckbürste und die Rotationsfrequenz der Motorwelle 16 können zusätzlich so gewählt werden, daß beim Erreichen der empfohlenen maximalen Sollkraft der Kontakt zwischen Folgeteil und Antriebsteil dauerhaft geöffnet bleibt.

Um ein den Eingriffszustand wiedergebendes Signal zu erzeugen, sind die aufeinander abrollenden bzw. abgleitenden Teile im Bereich des Nockens 17 metallisch ausgebildet. Bei der in Figur 1 gezeigten Ausführung ist insbesondere der metallische Außenring des Kugellagers direkt über den leitfähigen Kugelkäfig und den ebenfalls metallischen Innenring des Kugellagers mit der Motorwelle 16 leitend verbunden. Die Motorwelle ist leitend mit einer nicht näher dargestellten Auswerteeinheit verbunden. Ebenso metallisch ausgebildet ist die Kontaktfläche der Schwinge 9, mit der diese auf dem Außenring des Kugellagers sitzt, so daß bei Eingriff zwischen Schwinge und Kugellager ein elektrisch leitender Kontakt vorhanden ist. Sobald die Schwinge von dem Kugellager abhebt wird der Kontakt geöffnet und ein entsprechendes Signal unterbrochen. Die schwingenseitige Kontaktfläche ist über eine Leitung 28 ebenfalls mit der Auswerteeinheit elektrisch verbunden. Anstelle der unmittelbaren Verbindung des Kugellageraußenrings über den Kugelkäfig und den Innenring mit der Motorwelle 16 kann auch vorgesehen sein, daß der Kugellageraußenring z. B. über eine Kontaktfeder 29 direkt abgegriffen und mit der Auswerteeinheit verbunden wird. Die Auswerteeinheit steuert eine oder mehrere vorzugsweise farbige Signallampen 30. Eine durchsichtige Anzeigevorrichtung 31 leuchtet entsprechend der erfaßten Andruckkraft in verschiedenen Farben oder mittels Pulssignalen.

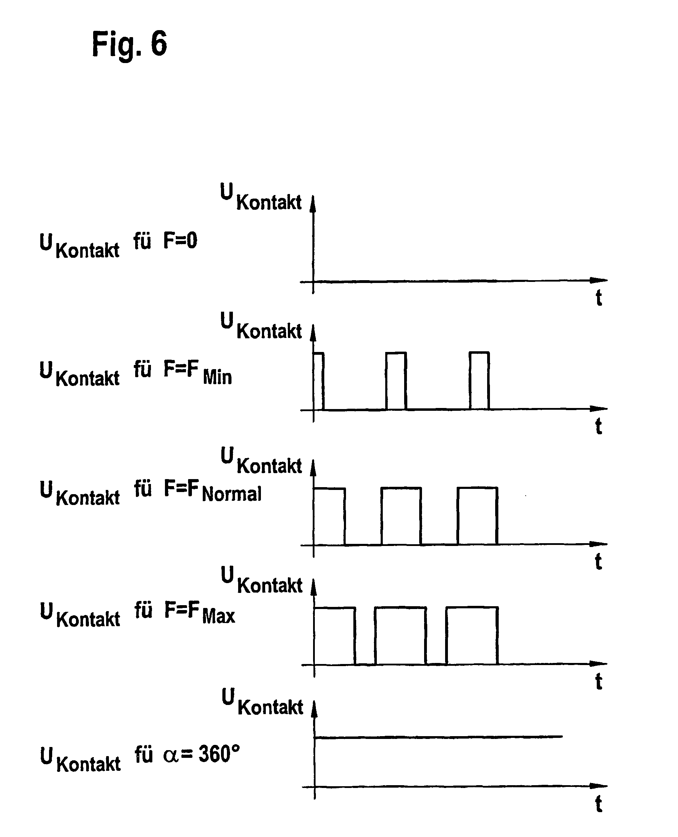

Im Betrieb der elektrischen Zahnbürste ergeben sich entsprechend der Wahl der Vorspannung drei Betriebsbereiche. Solange die Andruckkraft unter dem unteren Sollwert bleibt und dementsprechend Folgeteil und Antriebsteil in ständigem Kontakt sind, ergibt sich ein konstantes Signalniveau auf einem ersten Niveau, wie dies Figur 6 a zeigt. Sobald die Andruckkraft den unteren Sollwert überschreitet, den oberen Sollwert jedoch noch nicht überschreitet, erfolgt ein zyklisches Abheben und in Kontakt Bringen von Folgeteil und Antriebsteil, so daß sich ein pulsierendes Signal gemäß den Figuren 6 b, 6 c und 6 d ergibt. Das Signal springt zwischen zwei Signalzuständen hin und her, wobei sich das Tastverhältnis entsprechend einer Veränderung der Andruckkraft verändert. Figur 6 b zeigt das Signal am unteren Rand des Sollbereichs der Andruckkraft, Figur 6 c zeigt den Signalverlauf für eine Andruckkraft im mittleren Sollbereich und schließlich Figur 6 d zeigt den Signalverlauf für eine Andruckkraft am oberen Rand des Sollbereichs.

Überspringt schließlich die Andruckkraft den oberen Sollwert, ergibt sich wiederum ein konstantes Signalniveau, jedoch auf einem anderen Niveau als bei Unterschreiten des unteren Schwellwerts. Bei Überschreiten der oberen Grenze wird die Schwinge 9 permanent von dem motorseitigen Antriebsteil abgehoben.

Befindet sich die Andruckkraft in ihrem Sollbereich, kann eine quantitative Bestimmung der Andruckkraft anhand des Tastverhältnisses der Signalsprünge erfolgen. Das Tastverhältnis kann unmittelbar mit Hilfe eines Mikrokontrollers gemessen werden, so daß von diesem die Anzeige 31 angesteuert werden kann. Alternativ kann eine Auswertung mittels einer Filterschaltung erfolgen, die das Signal gemäß Figuren 6 b bis 6 d über Komparatoren mit Schwellwerten vergleicht.

## Patentansprüche

1. Elektrokleingerät des persönlichen Bedarfs, insbesondere Zahnbürste, mit einem beweglich gelagerten Arbeitskopf (3), einem Antrieb zur Erzeugung einer oszillierenden Arbeitsbewegung des Arbeitskopfs, wobei der Antrieb insbesondere ein zyklisch bewegbares Antriebsteil (17) sowie ein Folgeteil (18) aufweist, das mittels einer Vorspannvorrichtung (19) gegen das Antriebsteil gespannt ist, um dessen insbesondere zyklischer Antriebsbewegung zu folgen, **dadurch gekennzeichnet, dass** das Elektrokleingerät weiters eine Druckerfassungsvorrichtung zur Erfassung eines Anpreßdrucks des Arbeitskopfes aufweist , wobei die Druckerfassungsvorrichtung wobei die Druckerfassungsvorrichtung eine Kopplungserfassungsvorrichtung zur Erfassung des Kopplungszustandes von Folgeteil und Antriebsteil und eine Druckbestimmungsvorrichtung zur Bestimmung des Anpreßdrucks in Abhängigkeit des erfaßten Kopplungszustands aufweist.

2. Elektrokleingerät nach einem der vorhergehenden Ansprüche, wobei die Vorspannvorrichtung (19) derart ausgebildet ist, daß bei einem Anpreßdruck innerhalb eines Sollbereichs das Folgeteil (18) nur über einen Teilabschnitt eines Bewegungszyklusses des Antriebsteils (17) mit diesem gekoppelt ist.

3. Elektrokleingerät nach einem der vorhergehenden Ansprüche, wobei die Druckbestimmungseinrichtung derart ausgebildet ist, daß der Anpreßdruck aus einem Tastverhältnis bestimmt wird, welches aus einem Anteil eines Bewegungszyklusses des Antriebsteils (17), während dem das Folgeteil (18) der Antriebsbewegung des Antriebsteiles (17) folgt, und dem Anteil des Bewegungszyklusses, während dem das Folgeteil (18) von dem Antriebsteil (17) abgekoppelt ist, bestimmt wird.

4. Elektrokleingerät nach einem der vorhergehenden Ansprüche, wobei die Kopplungserfassungsvorrichtung als Kontakterfassungsvorrichtung zur Erfassung eines Kontaktes, insbesondere eines elektrisch leitenden Kontakts, zwischen dem Folgeteil (18) und dem Antriebsteil (17) ausgebildet ist.

5. Elektrokleingerät nach einem der vorhergehenden Ansprüche, wobei die Kopplungserfassungsvorrichtung einen Ein-/Ausschalter aufweist, der insbesondere von dem Folgeteil (18) und dem Antriebsteil (17) gebildet ist.

6. Elektrokleingerät nach einem der vorhergehenden Ansprüche, wobei der Antrieb als Hubantrieb zur Erzeugung einer im wesentlichen translatorischen Hubwegung des Arbeitskopfes (3) ausgebildet ist.

7. Elektrokleingerät nach einem der vorhergehenden Ansprüche, wobei das zyklisch bewegbare Antriebsteil (17) ein insbesondere rotatorisch antreibbarer Nocken (17) ist.

8. Elektrokleingerät nach einem der vorhergehenden Ansprüche, wobei das Folgeteil Teil einer Wippe (9, 2) ist, deren eines Ende den Arbeitskopf (3) trägt und deren anderes Ende gegen den Antriebsteil (17) gespannt ist.

9. Elektrokleingerät nach einem der vorhergehenden Ansprüche, wobei eine Einstellvorrichtung (24) zur Einstellung der Vorspannkraft vorgesehen ist, mit der das Folgeteil (18) gegen das Antriebsteil (17) gespannt ist.

10. Elektrokleingerät nach einem der vorhergehenden Ansprüche, wobei die Druckbestimmungsvorrichtung eine Filterschaltung aufweist, deren Eingangsseite mit der Kopplungserfassungseinrichtung verbunden ist.

11. Elektrokleingerät nach einem der vorhergehenden Ansprüche, wobei die Druckbestimmungsvorrichtung eine Recheneinheit, insbesondere einen Mikrokontroller aufweist.

12. Elektrokleingerät nach einem der vorhergehenden Ansprüche, wobei eine Anzeigevorrichtung, insbesondere eine LED-Anzeige, zur Anzeige des bestimmten Anpreßdrucks vorgesehen ist.

## Claims

1. Small electrical appliance for personal use, in particular a toothbrush, having an operating head (3) which is mounted in a movable manner, a drive for producing an oscillating operating movement of the operating head, the drive having, in particular, a cyclically movable drive part (17) and a follower part (18), which is held under stress, by means of a prestressing device (19), against the drive part in order to follow the, in particular, cyclic drive movement of the latter, **characterized in that** the small electrical appliance further has a pressure-sensing device for sensing a contact pressure of the operating head, the pressure-sensing device having a coupling-sensing device for sensing the coupling state of the follower part and drive part, and a pressure-determining device for determining the contact pressure in dependence on the coupling state sensed.

2. Small electrical appliance according to one of the preceding claims, the prestressing device (19) being designed such that, in the case of a contact pressure within a desired range, the follower part (18) is only coupled to the drive part (17) over part of a movement cycle of the latter.

3. Small electrical appliance according to one of the preceding claims, the pressure-determining arrangement being designed such that the contact pressure is determined from a duty factor which is determined from part of a movement cycle of the drive part (17) during which the follower part (18) follows the drive movement of the drive part (17) and that part of the movement cycle during which the follower part (18) is uncoupled from the drive part (17).

4. Small electrical appliance according to one of the preceding claims, the coupling-sensing device being designed as a contact-sensing device for sensing contact, in particular electrically conductive contact, between the follower part (18) and the drive part (17).

5. Small electrical appliance according to one of the preceding claims, the coupling-sensing device having an on/off switch which is formed, in particular, by the follower part (18) and the drive part (17).

6. Small electrical appliance according to one of the preceding claims, the drive being designed as a stroke drive for producing an essentially translatory stroke movement of the operating head (3).

7. Small electrical appliance according to one of the preceding claims, the cyclically movable drive part (17) being, in particular, a cam (17) which can be driven in rotation.

8. Small electrical appliance according to one of the preceding claims, the follower part being part of a rocker (9, 2), of which one end bears the operating head (3) and the other end is held under stress against the drive part (17).

9. Small electrical appliance according to one of the preceding claims, an adjusting device (24) being provided for adjusting the prestressing force by means of which the follower part (18) is held under stress against the drive part (17).

10. Small electrical appliance according to one of the preceding claims, the pressure-determining device having a filter circuit, of which the input side is connected to the coupling-sensing arrangement.

11. Small electrical appliance according to one of the preceding claims, the pressure-determining device having a computing unit, in particular a microcontroller.

12. Small electrical appliance according to one of the preceding claims, an indicator, in particular an LED display, being provided for indicating the contact pressure determined.

## Revendications

1. Petit appareil électrique pour usage personnel, notamment brosse à dents, comportant une tête fonctionnelle (3) s'appuyant de manière mobile, une commande pour la génération d'un mouvement fonctionnel oscillant de la tête fonctionnelle, la commande présentant notamment une pièce motrice mobile cycliquement (17) ainsi qu'une pièce suiveuse (18) qui est serrée contre la pièce motrice au moyen d'un dispositif de précontrainte (19) afin de suivre son mouvement moteur notamment cyclique, **caractérisé en ce que** le petit appareil électrique présente en outre un dispositif d'enregistrement de pression pour enregistrer une force de compression de la tête fonctionnelle, le dispositif d'enregistrement de pression présentant un dispositif d'enregistrement de couplage pour enregistrer l'état de couplage de la pièce suiveuse et de la pièce motrice et un dispositif de détermination de pression pour déterminer la force de compression en fonction de l'état de couplage enregistré.

2. Petit appareil électrique selon une des revendications précédentes, dans lequel le dispositif de précontrainte (19) est réalisé de manière à ce que, dans le cas d'une force de compression se situant à l'intérieur d'une plage théorique, la pièce suiveuse (18) ne soit couplée que par une section partielle d'un cycle de mouvement de la pièce motrice (17) à celle-ci.

3. Petit appareil électrique selon une des revendications précédentes, dans lequel le dispositif de détermination de pression est réalisé de manière à ce que la force de compression soit déterminée à partir d'un rapport de contact qui est déterminé à partir d'une fraction d'un cycle de mouvement de la pièce motrice (17) pendant lequel la pièce suiveuse (18) suit le mouvement moteur de la pièce motrice (17) et de la fraction du cycle de mouvement pendant lequel la pièce suiveuse (18) est désaccouplée de la pièce motrice (17).

4. Petit appareil électrique selon une des revendications précédentes, dans lequel le dispositif d'enregistrement de couplage est réalisé sous forme d'un dispositif d'enregistrement de contact pour l'enregistrement d'un contact, notamment d'un contact conducteur d'électricité entre la pièce suiveuse (18) et la pièce motrice (17).

5. Petit appareil électrique selon une des revendications précédentes, dans lequel le dispositif d'enregistrement de couplage présente un commutateur marche/arrêt qui est constitué notamment par la pièce suiveuse (18) et la pièce motrice (17).

6. Petit appareil électrique selon une des revendications précédentes, dans lequel la commande est réalisée sous forme d'une commande de levage permettant de générer un mouvement de levage sensiblement translatoire de la tête fonctionnelle (3).

7. Petit appareil électrique selon une des revendications précédentes, dans lequel la pièce motrice cycliquement (17) est une came (17) pouvant être entraînée notamment en rotation.

8. Petit appareil électrique selon une des revendications précédentes, dans lequel la pièce suiveuse est une bascule (9, 2) dont une extrémité supporte la tête fonctionnelle (3) et dont l'autre extrémité est serrée contre la pièce motrice (17).

9. Petit appareil électrique selon une des revendications précédentes, dans lequel il est prévu un dispositif de réglage (24) pour régler la force de précontrainte avec laquelle la pièce suiveuse (18) est serrée contre la pièce motrice (17).

10. Petit appareil électrique selon une des revendications précédentes, dans lequel le dispositif de détermination de pression présente un circuit de filtrage dont le côté entrée est relié au dispositif d'enregistrement de couplage.

11. Petit appareil électrique selon une des revendications précédentes, dans lequel le dispositif de détermination de pression présente une unité de calcul, notamment un microcontrôleur.

12. Petit appareil électrique selon une des revendications précédentes, dans lequel est prévu un dispositif d'affichage, notamment un afficheur à DEL, pour l'affichage de la force de compression déterminée.
